# EUROPEAN PATENT APPLICATION

(11) **EP 2 641 715 A2**
(43) Date of publication of application: **25.09.2013**
(21) Application number: 13160077.7
(22) Date of filing: 20.03.2013
(51) Int. Cl.: B29B 7/30

(54) **A white goods production method and system**

(30) Priority: 23.03.2012 TR 201203380
(71) Applicant: Vestel Beyaz Esya Sanayi ve Ticaret A.S., 45030 Manisa (TR)
(72) Inventor: Cinar, Cem, 45030 Manisa (TR)
(74) Representative: Cayli, Hülya

(57) **Abstract**

Production method developed by the present invention for the production of parts with antimicrobial feature which form various sections of white goods comprises the steps of fluidifying the antimicrobial material, which is silver ion-free, by mixing it with oil; gathering the fluid mixture having antimicrobial feature in a dosage unit (4) separated from a raw material unit (1) in which a raw material mixture in particle form is gathered and from which the gathered raw material is fed into a mixing unit (2) where the raw material is melted by being mixed; delivering the antimicrobial mixture gathered in the dosage unit (4) to the mixing unit (2); mixing the melted raw material mixture and antimicrobial mixture together in the mixing unit (2); producing a part of white goods in desired form by the delivery of obtained mixture to the molding unit (3).

## Description

### Field of Invention

Present invention relates to production methods of parts with antimicrobial features of white goods such as cooling device and to production systems in which these methods are applied.

### Prior Art

White goods, such as cooling devices, comprise parts with antimicrobial features so as to prevent reproduction of microbial living beings such as bacteria, mold and fungus, in particular due to their direct contact with food. These parts are used in forming such sections as body, door, and shelf of the white goods, and various applications are present in the state of art for these parts to gain antimicrobial features.

One of these applications is coating application, the exemplary embodiments of which are given in published patent documents DE20214601U1, WO9924253A1 and JP9140484A. Antimicrobial material with various contents is applied on the surface of the part desired to have antimicrobial feature, preferably which can be in contact with food, by varied techniques such as dyeing, spraying and dipping, and accordingly the surface of the part gains antimicrobial feature. However, in this application, the antimicrobial feature can lose its function in time. Additionally, it increases labor costs due to an external process applied after the production of the part. Another application is the use of silver ions as described in published patent documents KR20040085322A and JP6023191A. However, silver ions have negative effects on nature in the process of recycling.

In the published patent document US2005042247A1 of the state of the art, two different applications developed for the production of parts with antimicrobial features according to various production methods are disclosed. As regards to the parts to be produced by coextrusion molding technique, a work piece is formed by raw material mixture, and the surface of this work piece is coated with a material having antimicrobial feature and including silver ions. Then, this coated work piece is deformed and production of parts in desired forms is completed. Regarding the parts to be produced by injection molding technique, granulated antimicrobial material is added to the granulated raw material mixture and then this mixture is molded and production of the part in desired form is completed. However, separate procedures are applied for each production technique in the production disclosed in said document and therefore production costs increase owing to prevention of continuous production. Besides, due to the use of an antimicrobial material in granulated form, entire surface of the part cannot have the same antimicrobial feature. In addition, since the used antimicrobial material has silver content, it has a negative effect on nature in the process of recycling.

### Brief Description of Invention

Production method developed by the present invention for the production of parts with antimicrobial feature which form various sections of white goods comprises the steps of fluidifying the antimicrobial material in particle form, which is silver ion-free, by mixing it with an oil; gathering the fluid mixture having antimicrobial feature in a dosage unit separated from a raw material unit in which a raw material mixture in particle form is gathered and from which the gathered raw material is fed into a mixing unit where the raw material is melted by being mixed; delivering the fluid mixture with antimicrobial feature gathered in the dosage unit to said mixing unit; mixing the melted raw material mixture coming from the raw material unit and antimicrobial mixture coming from the dosage unit together in said mixing unit; producing a part of white goods in desired form by the delivery of the obtained mixture to a molding unit. Production system, in turn, comprises at least one raw material unit in which the raw material mixture in particle form is added and which has at least one outlet; at least one mixing unit into which the raw material in particle form in the raw material unit is transmitted from said outlet and where said raw material is melted by being mixed; at least one molding unit into which the fluid in the mixing unit is transmitted to have the desired part form; at least one dosage unit which is in connection with said outlet and in which an antimicrobial material fluidified by being mixed with oil is gathered and transmitted from said outlet into the mixing unit so as to be mixed with raw material in the mixing unit at a certain proportion.

Through the method and system of the present invention, a white goods part, each surface of which has the same antimicrobial feature, is able to be produced by providing the addition of the antimicrobial material to the raw material mixture in a fluid form. Additionally, through this developed method, parts which do not have any negative effects on nature are able to be produced in a cheap, easy and safe way by providing the use of an antimicrobial material which does not contain silver ion.

### Objective of Invention

Objective of the present invention is to develop a production method for white goods comprising parts with antimicrobial feature and a production system in which this method is used.

Another objective of the present invention is to develop a production method which is able to be used in all molding systems by which the parts with antimicrobial feature are produced.

Yet another objective of the present invention is to develop a production method which is able to be used easily in all plastic production methods by which the parts with antimicrobial feature are produced.

A further objective of the present invention is to develop a production method for the production of the parts having antimicrobial feature without use of any silver ions and a production system in which this method is used.

Another objective of the present invention is to develop a cheap, easy and safe production method for white goods comprising parts with antimicrobial feature and a production system in which this method is used.

### Description of Invention

Examples of the production system in which the production method of the present invention is able to be applied are shown in the attached figures wherein;
Figure 1 is a block diagram of the injection molding system.
Figure 2 is a block diagram of the extrusion molding system.
Figure 3 is a block diagram of the blow molding system.

The parts in the figures are individually enumerated and the corresponding terms of these numbers are given below:

| | |
|---|---|
| Production system | (K) |
| Raw material unit | (1) |
| Outlet | (1a) |
| Mixing unit | (2) |
| Molding unit | (3) |
| Dosage unit | (4) |

### Disclosure of Invention

White goods, such as cooling devices, comprise parts with antimicrobial features so as to prevent reproduction of microbial living beings such as bacteria, mold and fungus, in particular due to their direct contact with food. These parts are used in forming such sections as body, door and shelf of white goods and preferably produced by various molding systems (such as injection, extrusion, blow molding etc.). For the production of these parts, silver ions are commonly used. However, these silver ions have negative effects on nature in the process of recycling. For this reason, a production method applicable for the production of parts with antimicrobial feature, which do not contain silver ion, in order to form the various sections of white goods and a production system, in which this method is used, are developed by the present invention.

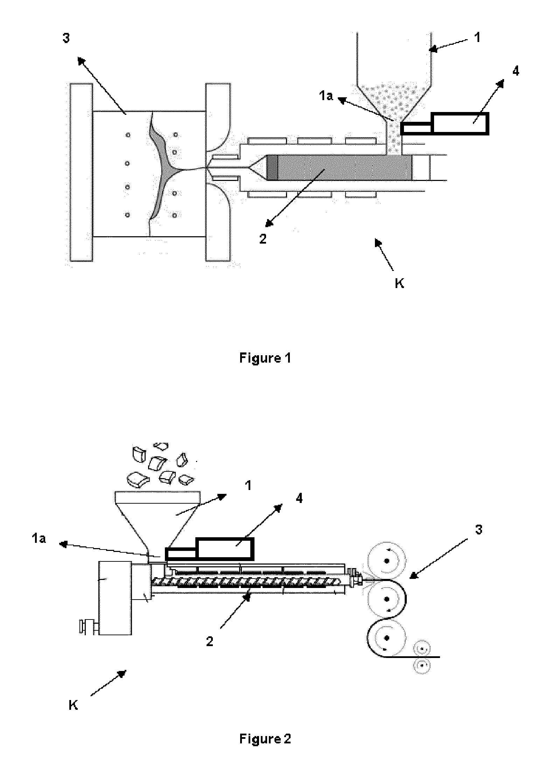

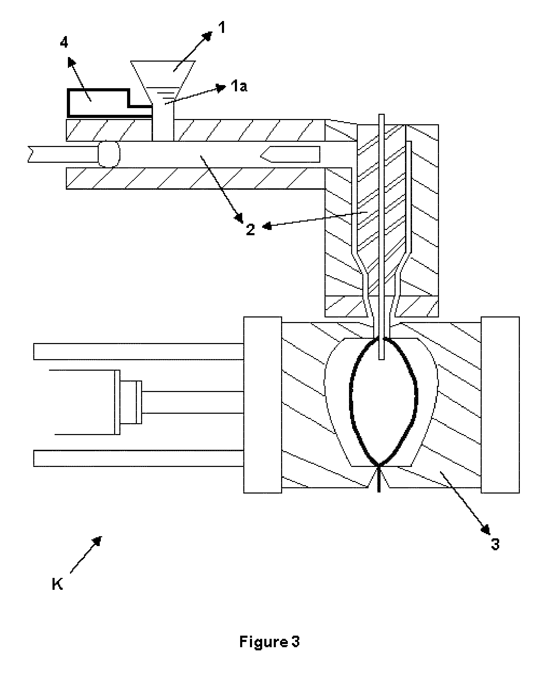

Production method of the present invention is applicable for the use in various production systems (K), exemplary views of which are given in figure 1-3, and comprises the steps of fluidifying the silver-free antimicrobial material in particle (generally granule or powder) form by being mixed with an oil preferably having petroleum content (e.g. white mineral oil no 10); gathering the fluid mixture having antimicrobial feature in a dosage unit (4) separated from a raw material unit (1) in which a raw material mixture (together with the raw material, the mixture can also contain various admixture materials in granule or power form such as materials coloring the parts) in particle form (granule or powder etc.) is gathered and from which the gathered raw material mixture is fed into a mixing unit (2) where the raw material is melted by being mixed; delivering the fluid mixture with antimicrobial feature gathered in the dosage unit (4) to the mixing unit (2); mixing the melted raw material mixture and the antimicrobial mixture in said mixing unit (2) preferably homogenously and producing a white goods part in desired form by the delivery of the obtained homogenous mixture to a molding unit (3).

Through the method of the present invention, silver-free antimicrobial material in particle form is fluidified by being mixed with oil having petroleum content. Fluid antimicrobial mixture is added to the molten raw material mixture at a certain proportion during the process of melting the raw material mixture by mixing. Because of the fact that both antimicrobial material and raw material mixture are in fluid state, preferably a homogenous mixture is able to be obtained and accordingly parts, each surface of which has the same antimicrobial features, are able to be produced. In addition, since the antimicrobial mixture does not contain any silver ion, the produced parts do not have negative effects on nature. Besides, by fluidifying the antimicrobial material, a production method which is applicable for all sorts of molding systems (injection, extrusion, blow molding etc) and which is able to be used in all plastic production methods is able to be obtained. Additionally, by feeding the fluid antimicrobial mixture to the mixing unit (2) without mixing with the raw material mixture directly (in other words by feeding the raw material mixture and antimicrobial mixture to the mixing unit (2) from separate units), a continuous production is able to be obtained and production cost is able to be reduced. In other words, for example when a part is needed to be produced with an antimicrobial feature as the production process of the parts without antimicrobial feature continues, mixture with antimicrobial feature is able to be fed from the dosage unit (4) to the mixing unit (2) at a required proportion without the necessity for changing the raw material mixture in the raw material unit (1) and the part with antimicrobial feature is able to be produced. When it is needed to continue the production of parts without antimicrobial feature again, feeding of the mixture with antimicrobial feature from the dosage unit (4) to the mixing unit (2) is stopped and production of parts without antimicrobial feature is able to be continued. Thus, production of parts both with antimicrobial feature and without antimicrobial feature is able to be achieved without any interrupt in the production process.

Additionally, method of the present invention is easily able to be applied to all plastic production methods, which are currently in use and comprise a melting furnace for melting the raw material, by adding fluid antimicrobial material from the portion where the raw material passes to the melting furnace.

Production system (K) of the present invention, exemplary views of which are given in figure 1-3 and in which said production method is able to be applied, in turn, comprises at least one raw material unit (1) into which raw material mixture (together with the raw material, the mixture can also contain various admixture materials in granule or power form such as materials coloring the parts) in particle form is added and which has at least one outlet (1a); at least one mixing unit (2) in which raw material in particle form in the raw material unit (1) is transmitted from said outlet (1a) and said raw material is mixed by melting; at least one molding unit (3) in which the fluid in the mixing unit (2) is transmitted so as to be formed as a desired part; and at least one dosage unit (4) which is in connection with said outlet (1a) and in which antimicrobial material fluidified by being mixed with oil preferably having petroleum content is gathered and transmitted to the mixing unit (2) from said outlet (1a) so as to be mixed with raw material mixture in the mixing unit (2) at a certain proportion (i.e. this proportion is %0,2 to %0,3 of the raw material mixture by weight).

Raw material mixture in power or granule form is fed from said raw material unit (1) to the production system (K). Raw material mixture in the raw material unit (1) is transmitted to the mixing unit (2) so as to be melted and mixed for the molding process. During this process, antimicrobial material, which is fluidified by being mixed with oil preferably having petroleum content and gathered in dosage unit (4), is added to the raw material mixture in melted state in the mixing unit (2) by means of said dosage unit (4) at a certain proportion. Raw material mixture and antimicrobial mixture are transmitted from the mixing unit (2) to the molding unit (3) by being mixed homogenously in the mixing unit (2). Production of the desired white goods part is achieved in accordance with the molding technique (injection molding, extrusion molding and blow molding are illustrated in figure 1, figure 2 and figure 3 respectively) used in the molding unit (3). Furthermore, fluid antimicrobial mixture to be mixed with the raw material mixture by means of the said dosage unit (4) is able to be added to the raw material mixture at a required proportion without any interrupt in the production process, and accordingly production cost is able to be reduced.

Through the method and system of the present invention, white goods part, each surface of which has the same antimicrobial feature, is able to be produced by ensuring the addition of the antimicrobial material to the raw material mixture in a fluid form. Additionally, through this developed method, parts which do not have negative effects on human health are able to be produced with a cheap, easy and safe method by providing the use of silver-free antimicrobial material.

## Claims

1. A production method for the parts having antimicrobial feature and forming the sections of white goods such as its body, door, **characterized in that** the method comprises the steps of:
- fluidifying the antimicrobial material in particle form, which is silver ion-free, by mixing it with an oil;
- gathering the fluid mixture having antimicrobial feature in a dosage unit (4) separated from a raw material unit (2) in which a raw material mixture in particle form is gathered and from which the gathered raw material is fed into a mixing unit (2) where the raw material is melted by being mixed;
- delivering the fluid mixture with antimicrobial feature gathered in the dosage unit (4) to said mixing unit (2);
- mixing the melted raw material mixture coming from the raw material unit (1) and antimicrobial mixture coming from the dosage unit (4) together in said mixing unit (2);
- producing a part of white goods in desired form by the delivery of obtained mixture to a molding unit (3).

2. A method according to claim 1 **characterized in that** said oil is an oil with petroleum content.

3. A method according to claim 1 **characterized in that** melted raw material mixture and antimicrobial mixture are mixed in the mixing unit (2) homogenously.

4. A production system (K) for the parts having antimicrobial feature and forming the sections of white goods such as its body, door, **characterized in that** the system (K) comprises:
- at least one raw material unit (1) into which raw material mixture in particle form is added and which has at least one outlet (1 a);
- at least one mixing unit (2) in which raw material in particle form in the raw material unit (1) is transmitted from said outlet (1a) and said raw material is mixed by melting;
- at least one molding unit (3) in which the fluid in the mixing unit (2) is transmitted so as to be formed as a desired part;
- at least one dosage unit (4) which is in connection with said outlet (1a) and in which antimicrobial material fluidified by being mixed with oil is gathered and transmitted to the mixing unit (2) from said outlet (1 a) so as to be mixed with raw material mixture in the mixing unit (2) at a certain proportion.

5. A production system (K) according to claim 4 **characterized in that** said system (K) is an injection molding system.

6. A production system (K) according to claim 4 **characterized in that** said system (K) is an extrusion molding system.

7. A production system (K) according to claim 4 **characterized in that** said system (K) is a blow molding system.
